# EUROPÄISCHE PATENTSCHRIFT

(11) **EP 0 746 171 B1**
(45) Veröffentlichungstag und Bekanntmachung des Hinweises auf die Patenterteilung: **05.11.2003**
(21) Anmeldenummer: 96108342.5
(22) Anmeldetag: 24.05.1996
(51) Int. Cl.: H04Q 3/545

(54) **Verfahren zur Aktualisierung der Programmstruktur einer modularen Kommunikationsanlage**
Method for updating the program structure of a modular communication installation
Procédé pour actualiser la structure de programme d'une installation de communication modulaire

(30) Priorität: 31.05.1995 DE 19520030
(43) Veröffentlichungstag der Anmeldung: 04.12.1996
(73) Patentinhaber: SIEMENS AKTIENGESELLSCHAFT, 80333 München (DE)
(72) Erfinder: Leimkötter, Ulrich, Dipl.-Ing., 45888 Gelsenkirchen (DE)

(56) Entgegenhaltungen:
- EP-A- 0 162 970
- EP-A- 0 607 493
- DE-A- 4 414 597
- US-A- 5 201 045
- PATENT ABSTRACTS OF JAPAN vol. 018, no. 376 (P-1770), 14. Juli 1994 (1994-07-14) & JP 06 103055 A (FUJITSU LTD), 15. April 1994 (1994-04-15)

## Beschreibung

Die Erfindung betrifft ein Verfahren zur Aktualisierung der Programmstruktur einer modularen, aus über einen gemeinsamen Bus verbundenen rechnergesteuerten Baugruppen bestehenden Kommunikationsanlage, wobei eine der rechnergesteuerten Baugruppen als Hauptbaugruppe festgelegt ist und jede rechnergesteuerte Baugruppe über programmierbare Programmspeicher verfügt.

Beispielsweise ist aus den Patent Abstracts of Japan JP 06 103055 A ein Verfahren zur Aktualisierung eines Basisprogramms in einem Informationsverarbeitungssystem bekannt. Das Informationsverarbeitungssystem weist mehrere Einheiten auf, die jeweils über eine Wartungseinheit SVP verfügen, die mit einem abgesetztem Wartungsunterstützungssystem verbunden sind. In dem Wartungsunterstützungssystem ist dabei die aktuellste Version des Basisprogramms gespeichert. In Fällen, in denen in einer Einheit des Informationsverarbeitungssystems eine ältere Version des Basisprogramms implementiert ist, fordert die entsprechende Wartungseinheit SVP die aktuellere Version des Basisprogramms vom Wartungsunterstützungssystem an, implementiert die aktuellere Version in der Einheit und informiert die Wartungseinheiten SVP der anderen Einheiten über die Implementierung des aktuelleren Basisprogramms.

Des weiteren ist aus der europäischen Offenlegungsschrift EP 0 162 970 A ein Verfahren zur Verteilung von Datenpaketen in einem System bekannt, wobei das System mehrere untereinander verbundene Module aufweist, die jeweils über eine moduleigene Speichereinheit verfügen. Hierbei ist eines der Module als zentrales Modul eingerichtet, von dem aus die Datenpakete an vorbestimmte Module übermittelt und in den entsprechenden Speichereinheiten gespeichert werden. Ausgehend von diesen Speichereinheiten werden die Datenpakete an weitere Module verteilt.

Kommunikationsanlagen sind Anordnungen zum Auf- und Abbau von Kommunikationsverbindungen von und zu Kommunikationsendgeräten, die an die jeweilige Kommunikationsanlage angeschlossen sind, und dienen weiterhin der Unterstützung weiterer Leistungsmerkmale vor, während oder nach einer Kommunikationsverbindung. Diese üblicherweise programmgesteuerten Kommunikationsanlagen sind mit weiteren Kommunikationsanlagen über öffentliche oder private Netze verbindbar. Eine derartige Kommunikationsanlage ist aus der europäischen Patentschrift EP 0 347 644 bekannt.

Kommunikationsanlagen sind zunehmend modular aufgebaut, um flexibel an verschiedene Einsatzumgebungen anpaßbar zu sein. Die über einen gemeinsamen Bus entsprechend dem modularen Konzept verbundenen Baugruppen sind dabei zumindest teilweise gleichartig, d.h. durch Hinzufügen weiterer Baugruppen kann eine quantitative Erweiterung bestimmter Funktionen wie z.B. die Anzahl vermittelbarer Kommunikationsendgeräte vorgenommen werden.

In einer solchen Kommunikationsanlage kommen auf jeder Baugruppe ein oder mehrere Programme zum Einsatz, die z.B. Komponenten zur Inbetriebnahme der Baugruppe und zur Steuerung der Funktionen der Baugruppe sowie anwendungsspezifische Komponenten umfassen. Diese Programme sind in programmierbaren Speichern der Baugruppe gespeichert und bewirken zusammen mit den der jeweiligen Baugruppe zugeordneten zumindest einen Prozessorbaugruppe den vorgegebenen Funktionsablauf der Baugruppe.

Das Laden bzw. Speichern der Programme in die programmierbaren Speicher der Baugruppe hatte bisher vor oder während einer Inbetriebnahme der Kommunikationsanlage auf allen Baugruppen zu erfolgen. Auch mußte bei einem Nachrüsten der Kommunikationsanlage mit einer zusätzlichen Baugruppe oder beim Austausch einer Baugruppe diese Baugruppe zuvor mit Programmen geladen werden.

Aufgrund der unterschiedlichen Aktualität von gespeicherten und neu geladenen Programmen kann es unter Umständen zu Kompatibilitätsprobleme zwischen den auf dieser neu hinzugekommenen Baugruppe und den bereits auf den anderen Baugruppen eingesetzten Programmen kommen. Zur Behebung der Kompatibilitätsprobleme mußte im Sinne eines Austausches der Programme das Laden der aktuellsten Programme für die verschiedenen Baugruppen manuell eingeleitet werden.

Die Erfindung liegt die Aufgabe zugrunde, die Aktualisierung der Programmstruktur insbesondere bei einer Inbetriebnahme und beim Ändern der Konfiguration einer Kommunikationsanlage zu vereinfachen. Diese Aufgabe wird von einem Verfahren nach den Merkmalen des Oberbegriffs des Patentanspruchs 1 durch die Merkmale des kennzeichnenden Teils gelöst.

Ein wesentlicher Vorteil des erfindungsgemäßen Verfahrens ist in der sofortigen Einleitung und Automatisierung der Aktualisierung der Programmstruktur auf den Baugruppen einer Kommunikationsanlage zu sehen. Es wird dadurch keine Bedienperson zur Durchführung der Wartung der Programme benötigt. Der Austausch programmtechnisch und schaltungstechnisch bezogener Nachrichten zwischen den Baugruppen wird durch eine Hauptbaugruppe nach der Inbetriebnahme der Kommunikationsanlage oder nach einer Veränderung der Konfiguration der Kommunikationsanlage eingeleitet - Anspruch 2.

Unabhängig davon, ob bei einer Inbetriebnahme oder einer Konfigurationsänderung alle Baugruppen über die aktuellsten Programme verfügen und ob schon vorhandene oder neu hinzugekommene Baugruppen die aktuellsten Programme enthalten, wird die Programmstruktur in den Baugruppen der Kommunikationsanlage aktualisiert. Diese Automatisierung spart erheblichen Aufwand bei der Vorbereitung der Inbetriebnahme der Kommunikationsanlage, da nur jeweils eine Baugruppe über die jeweils aktuellsten Programme verfügen muß und den anderen Baugruppen die aktuellsten Programme automatisch übermittelt werden.

Auch beim Ändern der Konfiguration der Kommunikationsanlage wird der Vorbereitungsaufwand reduziert, da beim Nachrüsten oder beim Austausch von Baugruppen die Programme nicht bereits auf der Baugruppe gespeichert sein müssen, sondern die Baugruppen von den bereits vorhandenen gleichartigen Baugruppen die aktuellsten Programme übermittelt werden.

Beim Nachrüsten oder beim Austausch von Baugruppen können auch aktuellste Programme auf alle anderen Baugruppen übertragen werden, wenn auf der hinzugekommenen Baugruppe die aktuellsten Programmem gespeichert sind. Damit werden eventuelle Kompatibilitätsprobleme vermieden.

Das erfindungsgemäße Verfahren wird dadurch vorteilhaft ausgestaltet, daß zur Steuerung des Nachrichtenaustausches und der Übermittlung bzw. des Empfangs von Programmen jeder Baugruppe ein Kommunikationsmanager zugeordnet ist und das jeweils aktuellste Programm über den gemeinsamen Bus übermittelt wird - Anspruch 3. Der Kommunikationsmanager ist resident auf jeder Baugruppe gespeichert und steuert die Kommunikation der jeweiligen Baugruppe mit den übrigen Baugruppen. Die Übermittlung der jeweils aktuellsten Programme wird durch die Kommunikationsmanager verschiedener nacheinander als Hauptbaugruppe festgelegter Baugruppen gesteuert, wenn die jeweils aktuellsten Programme nicht auf einer einzigen Baugruppe gespeichert sind - Anspruch 5. Dies bedeutet, daß vorteilhafterweise die Festlegung der Hauptbaugruppe und die Übermittlung der Programme solange zu erfolgen hat, bis eine vollständige Aktualität der Programmstruktur jeder Baugruppe erzielt wurde.

Entsprechend einer weiteren vorteilhaften Ausgestaltung ist die Hauptbaugruppe durch eine schaltungstechnisch vorgegebene Priorität festgelegt, wenn die Kommunikationsanlage in Betrieb genommen wird oder das jeweils aktuellste Programm in mehreren Baugruppen gespeichert ist - Anspruch 6. Damit kann das erfindungsgemäße Verfahren eingeleitet werden, auch wenn bisher noch keine Baugruppe im Verlauf des bisherigen Betriebes der Kommunikationsanlage als Hauptbaugruppe festgelegt ist bzw. keine Eindeutigkeit der Zuordnung zwischen aktuellstem Programm und einer Baugruppe vorliegt.

Im Falle einer Inbetriebnahme wird nach Abschluß der Übermittlung des zumindest einen aktuellsten Programms ein funktionstüchtiges Programmsystem durch Integration des zumindest einen übermittelten, aktuellsten Programms in ein programmtechnisches Gesamtsystem der jeweiligen Baugruppe und eine Initialisierung von der jeweiligen Baugruppe zugeordneten Datenbasen erzeugt - Anspruch 7. Dies ermöglicht eine modulare Struktur des Programmsystems, das vorteilhafterweise erst in der entsprechenden Baugruppe erzeugt werden muß.

Um eventuell neu hinzugekommene Leistungsmerkmale sofort wirksam zu machen, wird zur Anpassung an eine Konfigurationsveränderung nach Abschluß der Übermittlung des aktuellsten Programms eine Aktualisierung von der jeweiligen Baugruppe mit zuvor aktualisierten Programmen zugeordneten Datenbasen durchgeführt - Anspruch 8. Bestehende Daten können damit übernommen und eine Aktualisierung während des Betriebes ohne Einschränkung des Funktionsablaufes der Baugruppe erreicht werden. Dabei ist es vorteilhaft, daß die Einbeziehung des übermittelten aktuellsten Programms durch Ersatz zumindest eines bisher in den Funktionsablauf der Baugruppe einbezogenen Programms erfolgt - Anspruch 4. Üblicherweise sind Programmversionen aufwärtskompatibel, so daß aktuellere Versionen bisherige Programmversionen vollständig ersetzen können und zudem Speicherplatz durch Entfernen der bisher eingesetzen Programme gespart wird. Dazu sind Zusatzspeicher den Baugruppen zugeordnet, in denen das übermittelte aktuellste Programm gespeichert wird und auf die zur Einbeziehung des übermittelten aktuellsten Programms zumindest teilweise umgeschaltet wird - Anspruch 9.

Die Übermittlung des aktuellsten Programms an die betroffenen Baugruppen kann parallel - Anspruch 10- oder alternativ seriell - Anspruch 11 - erfolgen.

Zum Erzeugen eines Systemabbildes der Kommunikationsanlage auf jeder Baugruppe enthalten die schaltungstechnisch und programmtechnisch bezogenen Nachrichten vorteilhafterweise Informationen zur schaltungstechnisch vorgegebenen Priorität, zur Schaltungstechnik und zu Programmen auf der jeweiligen Baugruppe - Anspruch 13. Vorzugsweise enthalten die Informationen zu den Programmen eine Programmidentitätsnummer, die Art und Aktualität des jeweiligen Programms bezeichnet. Die Gleichartigkeit und Aktualität der Programme kann anhand dieser Programmidentitätsnummer eindeutig festgestellt werden - Anspruch 14.

Im folgenden wird das Verfahren zur Aktualisierung der Programmstruktur einer modularen Kommunikationsanlage anhand von Figuren näher erläutert.

Dabei zeigen:
- Figur 1: eine Kommunikationsanlage zur Durchführung des erfindungsgemäßen Verfahrens,
- Figur 2: den schematischen Ablauf des erfindungsgemäßen Verfahrens zur Inbetriebnahme der Kommunikationsanlage,
- Figur 3: den schematischen Ablauf des erfindungsgemäßen Verfahrens zur Anpassung der Progammstruktur nach einer Konfigurationsänderung der Kommunikationsanlage und
- Figur 4: den Ersatz der bisher verwendeten Programme durch die übermittelten Programme in der Kommunikationsanlage.

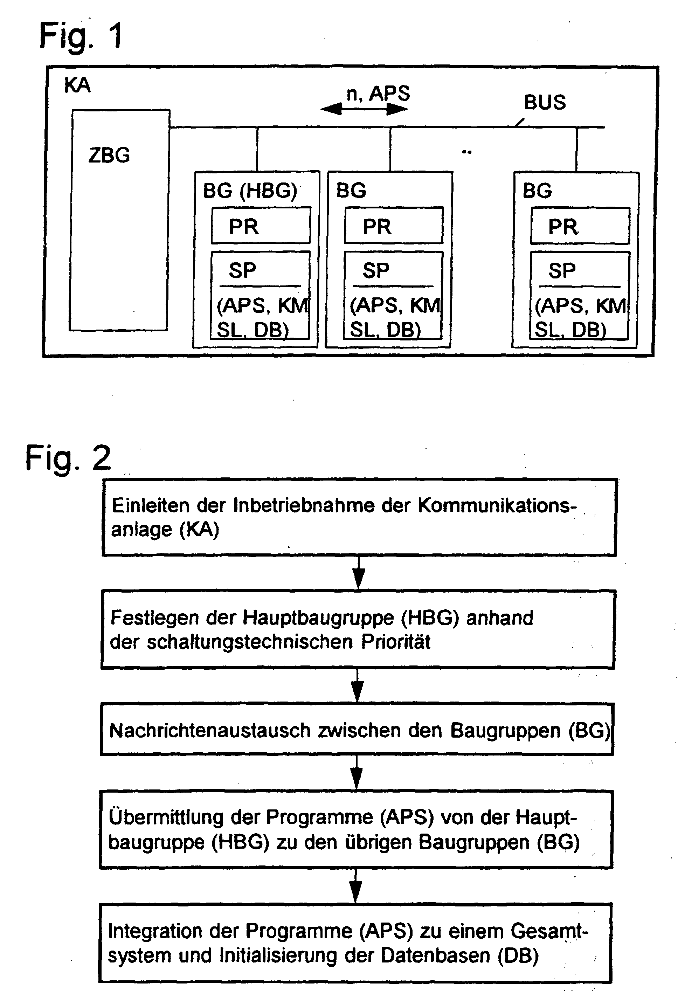

Die in Figur 1 dargestellte Kommunikationsanlage KA umfaßt beispielhaft drei Baugruppen BG und eine Zentralbaugruppe ZBG, die über einen gemeinsamen Bus BUS miteinander verbunden sind. Die Zentralbaugruppe ZBG schafft die Verbindung der Kommunikationsanlage KA zu einem öffentlichen Netz und dient weiterhin zur Steuerung und Wartung der Kommunikationsanlage KA. Eine der drei Baugruppen BG ist als Hauptbaugruppe HBG festgestellt und steuert den Nachrichten- und Programmaustausch auf dem gemeinsamen Bus BUS. Jede Baugruppe BG kann als Hauptbaugruppe HBG fungieren. Bei einer Inbetriebnahme oder einem Rücksetzen des Funktionsablaufes der Kommunikationsanlage KA ist die Hauptbaugruppe HBG schaltungstechnisch festgelegt, da jede Baugruppe BG konstruktiv in einem Steckplatz befestigt ist und diesem Steckplatz eine Priorität zugeordnet ist. Somit erhält in diesem Fall die Baugruppe BG im Steckplatz mit der höchsten Priorität die Funktion einer Hauptbaugruppe HBG. Im weiteren Funktionsablauf kann programmtechnisch eine neue Hauptbaugruppe HBG unabhängig vom Steckplatz festgelegt werden.

Jede Baugruppe BG enthält einen Prozessor PR, der im Zusammenwirken mit einem Programmspeicher SP und weiteren nicht dargestellten Funktionselementen die Arbeitsweise der Baugruppe BG steuert. Im Speicher SP sind - in Klammern gesetzt - Programme APS, die Komponenten zur Inbetriebnahme der Baugruppe BG zur Steuerung der Funktionen der Baugruppe BG sowie anwenderspezifische Komponenten umfassen, ein Kommunikationsmanager KM zum Steuern des Nachrichten- und Programmaustausches auf dem gemeinsamen Bus BUS, eine Systemliste SL mit einem schaltungs- und programmtechnischen Systemabbild der Kommunikationsanlage KA und Datenbasen DB abgelegt.

Das erfindungsgemäße Verfahren kann zur Inbetriebnahme der Kommunikationsanlage KA oder bei einer Änderung der Konfiguration der Kommunikationslage KA eingeleitet werden.

Anhand von Figur 2 wird der Inbetriebnahmefall geschildert. Die Inbetriebnahme kann extern, z.B. durch ein Einschalten der Kommunikationsanlage KA oder intern durch ein Rücksetzen oder gleichwirkende Maßnahmen eingeleitet werden. Anhand der Steckplatzadresse jeder Baugruppe BG ist eindeutig eine schaltungstechnische Priorität festgelegt und damit eine Hauptbaugruppe HBG zur Steuerung des Nachrichten- und Programmaustausches auf dem gemeinsamen Bus BUS bestimmt.

Diese Hauptbaugruppe HBG leitet den Austausch programmtechnisch und schaltungstechnisch bezogener Nachrichten n zwischen den Baugruppen BG ein. Dieser Nachrichtenaustausch dient der Erzeugung eines Systemabbildes der Kommunikationsanlage KA auf jeder Baugruppe BG. Das Systemabbild wird jeweils in einer Systemliste SL gespeichert. Zum Nachrichtenaustausch ist ein Zeitraster vorgegeben, wonach jedem Steckplatz und folglich jeder Baugruppe BG ein Sendezeitpunkt zugewiesen ist, der für die übrigen Baugruppen BG einem Empfangszeitpunkt für die der sendenden Baugruppe BG zugehörigen programmtechnisch und schaltungstechnisch bezogenen Nachrichten n entspricht. Diese programmtechnisch und schaltungstechnisch bezogenen Nachrichten n enthalten Informationen zur schaltungstechnisch vorgegebenen Priorität der sendenden Baugruppe BG, zur Schaltungstechnik der sendenden Baugruppe BG und zu den auf der sendenden Baugruppe BG eingesetzten Programmen APS. Die Programme APS sind insbesondere durch eine Programmidentitätsnummer bezeichnet, wobei diese Programmidentitätsnummer eine eindeutige Zuordnung zur Art und Aktualität des jeweiligen Programmes APS ermöglicht. Sind z.B. drei Programme APS auf einer Baugruppe BG im Einsatz, können sie z.B. durch die Programmidentitätsnummern A2, B3 und C1 bezeichnet werden. Dabei gibt A, B bzw. C die Art des Programms APS als Modul der Programmstruktur der Baugruppe BG an und die Ziffern 2,3 bzw. 1 sind eine Angabe zur Aktualität der jeweiligen Programme APS. Die Aktualität nimmt mit steigender Ziffer zu. Somit ist eindeutig zugeordnet, daß ein Programm APS z.B. mit der Programmidentitätsnummer A3 ein Programm APS mit der Programmidentitätsnummer A2 ersetzen kann. Als Ergebnis des Nachrichtenaustausches ist in der Systemliste SL einer jeden Baugruppe BG ein Systemabbild der Kommunikationsanlage KA gespeichert.

Im gewählten Beispiel sind die Baugruppen BG schaltungstechnisch identisch und im Speicher SP ist der Kommunikationsmanager KM gespeichert. Jedoch verfügt nur die Hauptbaugruppe HBG über die Programme APS zur Bildung einer aktuellsten funktionstüchtigen Programmstruktur. Die bisherige Hauptbaugruppe HBG ist damit auch im Beispiel die Baugruppe BG die das jeweils aktuellste Programm APS enthält, was anhand des Systemabbildes in jeder Baugruppe BG festgestellt werden kann. Somit fordert die bisherige Hauptbaugruppe HBG auch als einzige Baugruppe BG den Status einer Hauptbaugruppe HBG an. Dies geschieht zu einem durch das Zeitraster festgelegten Zeitpunkt. Der die Hauptbaugruppe HBG auszeichnende priorisierte Zugriff auf den gemeinsamen Bus BUS bleibt damit der bisherigen Hauptbaugruppe HBG erhalten.

Von der Hauptbaugruppe HBG werden in Folge alle Programme APS an die übrigen Baugruppe BG zu festgelegten Zeitpunkten übermittelt und durch die Kommunikationsmanager KM der übrigen Baugruppen BG in deren Programmspeicher SP geladen und gespeichert. In den übrigen Baugruppen BG findet nach Übermittlung der Programme APS eine Initialisierung der Programmstruktur der entsprechenden Baugruppe BG durch Einbindung aller übermittelter Programme APS und ggf. ein Einrichten der Datenbasen DB statt. Die Kommunikationsanlage KA ist damit in vollem Umfang in Betrieb gesetzt.

Bei der Übermittlung der Programme APS wird für jedes übermittelte Programm APS oder einem Teil davon ein Bittest zum Test auf Übertragungsfehler bei der jeweils empfangenden Baugruppe BG vorgenommen. Wird ein Fehler festgestellt, wird das fehlerhafte Programmsegment gelöscht und die Übermittlung wiederholt. Auch für die Gesamtheit der übertragenen Programme APS wird vor der Initialisierung der Programmstruktur ein Bittest durchgeführt. Bei festgestellten Fehlern wird ein erneuter Übertragungsversuch durchgeführt.

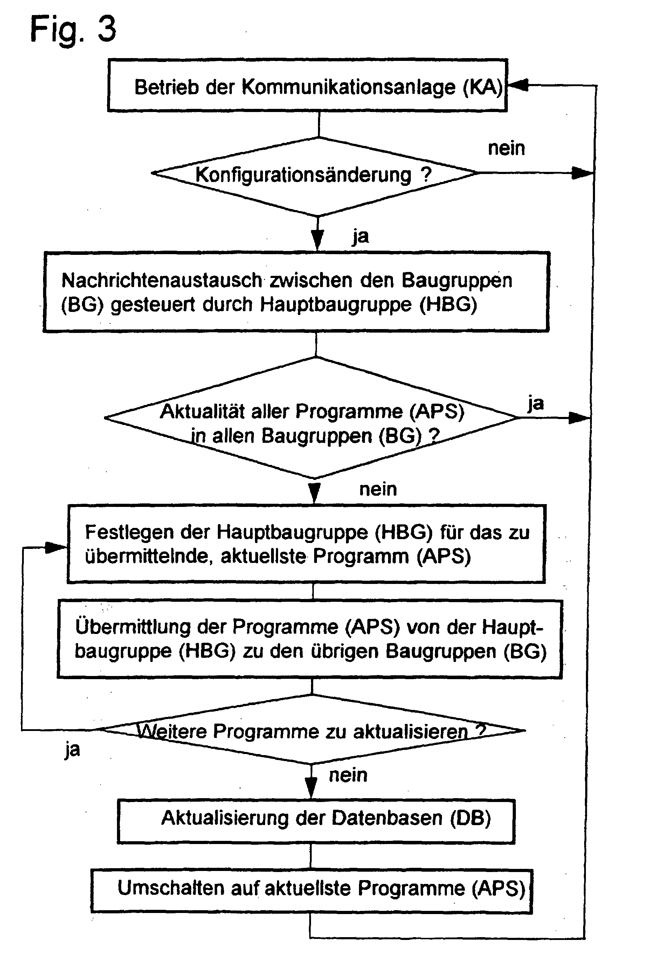

Figur 3 zeigt schematisch den Ablauf des erfindungsgemäßen Verfahrens nach einer Veränderung der Konfiguration der Kommunikationsanlage KA. Die Veränderung der Konfiguration der Kommunikationsanlage KA kann durch Hinzufügen einer Baugruppe BG, den Austausch einer Baugruppe BG oder die Entnahme einer Baugruppe BG eintreten. Die Kommunikationsanlage KA ist zu Beginn des erfindungsgemäßen Verfahrens in Betrieb, wobei durch die Hauptbaugruppe HBG in regelmäßigen Abständen einen Test auf Konfigurationsveränderungen durchgeführt wird. Dieser Test kann z.B. anhand einer Interrupt-Signalisierung beim Hinzufügen einer Baugruppe BG erfolgen. Es ist jedoch auch denkbar, den programmtechnisch und schaltungstechnisch bezogenen Nachrichtenaustausch zwischen den Baugruppen BG zum Test auf Konfigurationsänderungen heranzuziehen. Wird keine Konfigurationsänderung festgestellt, wird der Funktionsablauf in der Kommunikationsanlage KA unverändert fortgeführt.

Bei einer festgestellten Konfigurationsänderung wird durch die im Betrieb der Kommunikationsanlage KA bereits festgelegte Hauptbaugruppe HBG der in der Beschreibung zu Figur 2 angeführte Nachrichtenaustausch programmtechnisch und schaltungstechnisch bezogener Nachrichten n zwischen den Baugruppen BG gesteuert. Als Ergebnis dieses Nachrichtenaustausches liegen nun auch Informationen zur schaltungstechnisch vorgegebenen Priorität, zur Schaltungstechnik und zu den Programmen APS auf der neu hinzugekommenen Baugruppe BG in der Systemliste SL einer jeden Baugruppe BG vor. Durch den Kommunikationsmanager KM einer jeden Baugruppe BG wird getestet, ob ein ihm zur Verfügung, d.h. im Programmspeicher SP gespeichertes Programm APS ein auf einer anderen Baugruppe BG gespeichertes Programm APS ersetzen kann. Dieser Vergleich kann anhand der Programmidentitätsnummer durchgeführt werden. Ergibt dieser Test, daß das jeweils aktuellste Programm APS in allen Baugruppen BG vorliegt, und somit keine der Baugruppen BG den Status einer Hauptbaugruppe HBG zur Übermittlung des zumindest einen aktuellsten Programmes APS beantragt, wird der Betrieb der Kommunikationsanlage KA fortgesetzt.

Enthält z.B. die neu hinzugekommene Baugruppe BG ein Programm APS mit der Programmidentitätsnummer (A3), wobei die übrigen Baugruppen BG das Programm APS mit der Programmidentitätsnummer (A2) enthalten, beantragt die neu hinzugekommene Baugruppe BG den Status einer Hauptbaugruppe HBG. Dieser Status wird ihr von der bisherigen Hauptbaugruppe HBG zuerkannt, worauf die neue hinzugekommene Baugruppe BG als Hauptbaugruppe HBG den weiteren Verfahrensablauf steuert. Die neue Hauptbaugruppe HBG übermittelt auf die zuvor beschriebene Weise das Programm APS (A3) über den gemeinsamen Bus BUS an die übrigen Baugruppen BG.

Im Falle mehrerer zu aktualisierender Programme APS wird die Reihenfolge der Übermittlung durch die schaltungstechnisch vorgegebene Priorität der das jeweils aktuellste Programm APS enthaltenden Baugruppe BG bestimmt. Somit wiederholt sich das Verfahren mit der gleichen oder einer anderen Baugruppe BG als Hauptbaugruppe HBG. Nach Abschluß der Aktualisierung der Programmstruktur auf allen Baugruppen BG wird durch die Kommunikationsmanager KM jeder Baugruppe BG eine Aktualisierung der Datenbasen DB zur Anpassung an die unter Umständen veränderten Leistungsmerkmale der Programme APS eingeleitet. Mit vorliegenden aktualisierten Datenbasen DB kann in den Baugruppen BG mit aktualisierter Programmstruktur auf diese Programmstruktur umgeschaltet werden, ohne daß der Betrieb dieser Baugruppe BG unterbrochen werden muß. Nach dem Umschalten auf die aktualisierte Programmstruktur wird der Betrieb der Kommunikationsanlage KA mit der zuletzt festgelegten Baugruppe BG als Hauptbaugruppe HBG fortgeführt.

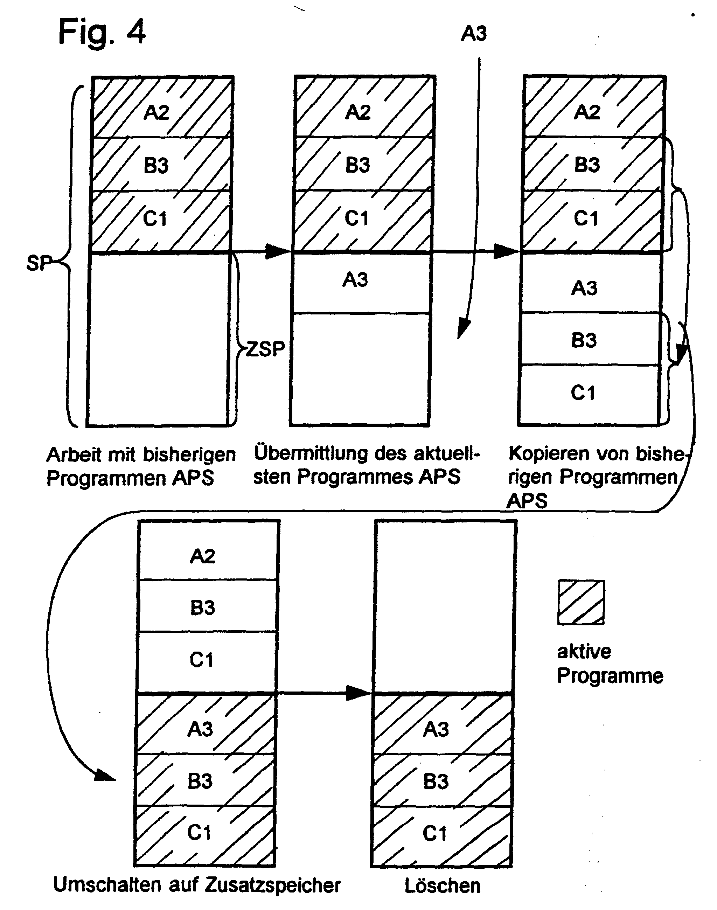

Der Ersatz der Programme APS in einer Baugruppe BG bei laufendem Betrieb durch die aktuellsten Programme APS wird anhand der Figur 4 erläutert. Eine Baugruppe BG verfügt über mindestens einen Programmspeicher SP mit einem Speicherbereich, der zumindest die zweifache Abspeicherung der im Sinne des erfindungsgemäßen Verfahrens austauschbaren Programme APS erlaubt. Die Baugruppe BG arbeitet mit den Programmen APS, beispielhaft werden drei Programme APS (A2, B3, C1) angenommen.

Vor der Übermittlung der aktuellsten Programme APS finden Tests statt, ob in den Baugruppen BG ein zur Übermittlung ausreichender Zusatzspeicher ZSP vorhanden ist und ob dessen Speicherbereich nicht schreibgeschützt ist. Sind diese Testes erfolgreich; wird nachgefragt, welche Bereiche im Zusatzspeicher ZSP verfügbar sind. Zusätzlich besteht die Möglichkeit, die Teilnehmerdaten, d.h. die in den Datenbasen DB enthaltenen Daten, als zusätzliche Sicherheitsmaßnahme zu kopieren.

Sind diese Vorbereitungsmaßnahmen zur Programmübermittlung getroffen, wird das beispielhafte Programm APS (A3) von der Hauptbaugruppe HBG an die übrigen Baugruppen BG übermittelt und dort in den Zusatzspeicher ZSP gespeichert. Das übermittelte Programm APS (A3) wird mit den bereits verwendeten Programmen APS (B3, C1) im Zusatzspeicher ZSP durch Kopieren ergänzt, um ein vollständiges funktionsfähiges Programmsystem in der Baugruppe BG zu erzeugen. Aktuellste Programme APS können beispielsweise jeweils mehrere bisher eingesetzte Programme APS ersetzen oder zum Ersatz eines bisher eingesetzten Programms APS können mehrere aktuellste, übermittelte Programme APS nötig sein. Die Gestaltung neuer aktueller Programmversionen APS ist nicht durch eine vorherige Einteilung der Funktionen der Baugruppe BG auf die einzelnen bisher eingesetzten Programme APS eingeengt. Die Spezialisierung bzw. Generalisierung der Programme APS für verschiedene schaltungstechnische Ausgestaltungen von Baugruppen BG ist jeweils möglich.

Ist der Bittest zum Test der Programmstruktur erfolgreich, werden die Maßnahmen zum Umschalten auf die aktualisierte Programmstruktur eingeleitet. Das Umschalten kann sofort als auch verzögert geschehen. Vor dem Umschalten auf die aktualisierte Programmstruktur wird diese initialisiert. Bei auftretenden Fehlern kann jederzeit auf die bisher eingesetzte Programmstruktur zurückgesteuert werden. Nach dem erfolgreichen Umschalten kann das ersetzte Programm APS (A2) zumindest teilweise gelöscht werden, damit bei weiteren Aktualisierungen wieder ausreichend Speicherplatz verfügbar ist.

Während der Übermittlung der Programme APS und während des Umschaltens werden Fehler und verfahrensspezifische Protokollmeldungen erzeugt und in einen Protokollspeicher abgelegt, dessen Inhalt über den Kommunikationsmanager KM abgefragt und an andere Baugruppen BG oder die Zentralbaugruppe ZBG übertragen werden kann.

## Patentansprüche

1. Verfahren zur Aktualisierung der Programmstruktur einer modularen, aus über einen gemeinsamen Bus (BUS) verbundenen rechnergesteuerten Baugruppen (BG) bestehenden Kömmunikationsanlage (KA), wobei eine der rechnergesteuerten Baugruppen (BG) als Hauptbaugruppe (HBG) festgelegt ist und jede rechnergesteuerte Baugruppe (BG) über programmierbare Programmspeicher (SP) verfügt,
**dadurch gekennzeichnet,**
- **daß** durch einen durch die Hauptbaugruppe (HBG) gesteuerten Austausch programmtechnisch und schaltungstechnisch bezogener Nachrichten (n) zwischen den Baugruppen (BG) ein Systemabbild der Kommunikationsanlage (KA) auf jeder Baugruppe (BG) erzeugt und jeweils in einer Systemliste (SL) gespeichert wird, wobei das Systemabbild informationen über auf den jeweiligen Baugruppen vorhandene Programme enthält,
- **daß** für jeweils in der Systemliste (SL) angezeigte gleichartige Programme (APS) mit Hilfe der Systemliste (SL) jeweils eine Baugruppe (BG), die das jeweils aktuellste Programm (APS) enthält, ermittelt und als Hauptbaugruppe (HBG) bestimmt wird,
- **daß** von der jeweils als Hauptbaugruppe (HBG) ermittelten Baugruppe (BG) zumindest einer Baugruppe (BG) das aktuellste Programm (APS) übermittelt und
- **daß** das übermittelte aktuellste Programm (APS) in den Funktionsablauf der jeweiligen Baugruppe (BG) einbezogen wird.

2. Verfahren nach Anspruch 1,
**dadurch gekennzeichnet,**
**daß** der Austausch programmtechnisch und schaltungstechnisch bezogener Nachrichten (n) zwischen den Baugruppen (BG) durch die Hauptbaugruppe (HBG) nach der Inbetriebnahme der Kommunikationsanlage (KA) oder nach einer Veränderung der Konfiguration der Kommunikationsanlage (KA) eingeleitet wird.

3. Verfahren nach Anspruch 1 oder 2,
**dadurch gekennzeichnet,**
**daß** das aktuellste Programm (APS) über den gemeinsamen Bus (BUS) für die zumindest eine Baugruppe (BG) übermittelt wird, wobei zur Steuerung des Nachrichtenaustausches und der Übermittlung bzw. des Empfangs von Programmen (APS) jeder Baugruppe (BG) ein Kommunikationsmanager (KM) zugeordnet ist.

4. Verfahren nach einem der vorhergehenden Ansprüche,
**dadurch gekennzeichnet,**
**daß** die Einbeziehung des übermittelten aktuellsten Programms (APS) durch Ersatz zumindest eines bisher in den Funktionsablauf der Baugruppe (BG) einbezogenen Programms (APS) erfolgt.

5. Verfahren nach einem der Ansprüche 3 oder 4,
**dadurch gekennzeichnet,**
**daß** die Übermittlung der jeweils aktuellsten Programme (APS) durch die Kommunikationsmanager (KM) verschiedener nacheinander als Hauptbaugruppe (HBG) festgelegter Baugruppen (BG) gesteuert wird, wenn die jeweils aktuellsten Programme (APS) nicht auf einer einzigen Baugruppe (BG) gespeichert sind.

6. Verfahren nach einem der vorhergehenden Ansprüche,
**dadurch gekennzeichnet,**
**daß** die Hauptbaugruppe (HBG) durch eine schaltungstechnisch vorgegebene Priorität festgelegt ist, wenn die Kommunikationsanlage (KA) in Betrieb genommen wird oder das jeweils aktuellste Programm (APS) in mehreren Baugruppen (BG) gespeichert ist.

7. Verfahren nach einem der vorhergehenden Ansprüche,
**dadurch gekennzeichnet,**
**daß** zur Inbetriebnahme nach Abschluß der Übermittlung des zumindest einen aktuellsten Programms (APS) eine Integration des zumindest einen übermittelten, aktuellsten Programms (APS) in ein programmtechnisches Gesamtsystem der jeweiligen Baugruppe (BG) und eine Initialisierung von der jeweiligen Baugruppe (BG) zugeordneten Datenbasen (DB) erfolgt.

8. Verfahren nach einem der Ansprüche 1 bis 6,
**dadurch gekennzeichnet,**
**daß** zur Anpassung an eine Konfigurationsveränderung nach Abschluß der Übermittlung des aktuellsten Programms (APS) eine Aktualisierung von der jeweiligen Baugruppe (BG) mit zuvor aktualisierten Programmen (APS) zugeordneten Datenbasen (DB) erfolgt.

9. Verfahren nach einem der Ansprüche 1 bis 6 oder 8,
**dadurch gekennzeichnet,**
**daß** zur Aktualisierung der Programme (APS) während des Betriebes der jeweiligen Baugruppe (BG) dieser Baugruppe (BG) ein Zusatzspeicher zugeordnet ist, in dem das übermittelte aktuellste Programm (APS) gespeichert wird und auf den zur Einbeziehung des übermittelten aktuellsten Programms (APS) zumindest teilweise umgeschaltet wird.

10. Verfahren nach einem der vorhergehenden Ansprüche,
**dadurch gekennzeichnet,**
**daß** die Übermittlung des aktuellsten Programms (APS) an die betroffenen Baugruppen (BG) jeweils parallel erfolgt.

11. Verfahren nach einem der Ansprüche 1 bis 8,
**dadurch gekennzeichnet,**
**daß** die Übermittlung des aktuellsten Programms (APS) an die die betroffenen Baugruppen (BG) seriell erfolgt.

12. Verfahren nach einem der vorhergehenden Ansprüche,
**dadurch gekennzeichnet,**
**daß** die Übermittlung des aktuellsten Programms (APS) nur an die zumindest eine Baugruppe (BG) ohne aktuellstes Programm (APS) erfolgt.

13. Verfahren nach einem der vorhergehenden Ansprüche,
**dadurch gekennzeichnet,**
**daß** die schaltungstechnisch und programmtechnisch bezogenen Nachrichten (n) zum Abbilden der Kommunikationsanlage (KA) auf jeder Baugruppe (BG) Informationen zur schaltungstechnisch vorgegebenen Priorität, zur Schaltungstechnik und zu Programmen (APS) auf der jeweiligen Baugruppe (BG) umfaßt.

14. Verfahren nach einem der vorhergehenden Ansprüche,
**dadurch gekennzeichnet,**
**daß** die Gleichartigkeit und Aktualität der Programme (APS) anhand einer Programmidentitätsnummer in den Informationen zu den Programmen (APS) festgestellt wird, wobei die Programmidentitätsnummer die Art und Aktualität des jeweiligen Programms (APS) bezeichnet.

## Claims

1. Method for updating the program structure in a modular communication installation (KA) comprising computer-controlled assemblies (BG) connected by means of a common bus (BUS), where one of the computer-controlled assemblies (BG) is stipulated as the primary assembly (HBG) and each computer-controlled assembly (BG) has programmable program stores (SP),
**characterized**
- **in that** interchange, controlled by the primary assembly (HBG), of program-related and circuit-related messages (n) between the assemblies (BG) generates a system map of the communication installation (KA) on each assembly (BG) and stores it in a respective system list (SL), the system map containing information about programs existing on the respective assemblies,
- **in that**, for similar programs (APS) respectively displayed in the system list (SL), the system list (SL) is used to ascertain a respective assembly (BG) containing the respectively most up-to-date program (APS) and to fix it as the primary assembly (HBG),
- **in that** the respective assembly (BG) ascertained to be the primary assembly (HBG) transmits the most up-to-date program (APS) to at least one assembly (BG), and
- **in that** the transmitted most up-to-date program (APS) is incorporated into the functional sequence of the respective assembly (BG).

2. Method according to Claim 1, **characterized**
**in that** the interchange of program-related and circuit-related messages (n) between the assemblies (BG) is initiated by the primary assembly (HBG) after the communication installation (KA) has been started up or after the configuration of the communication installation (KA) has been altered.

3. Method according to Claim 1 or 2,
**characterized**
**in that** the most up-to-date program (APS) is transmitted via the common bus (BUS) for the at least one assembly (BG), each assembly (BG) having an associated communication manager (KM) in order to control the message interchange and the transmission and reception of programs (APS).

4. Method according to one of the preceding claims,
**characterized**
**in that** the transmitted most up-to-date program (APS) is incorporated by replacing at least one program (APS) previously incorporated into the functional sequence of the assembly (BG).

5. Method according to one of Claims 3 or 4,
**characterized**
**in that** the transmission of the respectively most up-to-date programs (APS) is controlled by the communication managers (KM) for various assemblies (BG) successively stipulated as the primary assembly (HBG) if the respectively most up-to-date programs (APS) are not stored on a single assembly (BG).

6. Method according to one of the preceding claims,
**characterized**
**in that** the primary assembly (HBG) is stipulated by a priority prescribed in terms of circuitry when the communication installation (KA) is started up or the respectively most up-to-date program (APS) has been stored in a plurality of assemblies (BG).

7. Method according to one of the preceding claims,
**characterized**
**in that** the communication installation is started up, when transmission of the at least one most up-to-date program (APS) is complete, by integrating the at least one transmitted, most up-to-date program (APS) into a program-based overall system for the respective assembly (BG) and initializing databases (DB) associated with the respective assembly (BG).

8. Method according to one of Claims 1 to 6,
**characterized**
**in that** alignment with a configuration alteration when transmission of the most up-to-date program (APS) is complete is effected by updating the respective assembly (BG) with databases (DB) associated with previously updated programs (APS).

9. Method according to one of Claims 1 to 6 or 8,
**characterized**
**in that**, to update the programs (APS) during operation of the respective assembly (BG), this assembly (BG) has an associated additional memory which stores the transmitted most up-to-date program (APS) and to which changeover is effected at least to some extent in order to incorporate the transmitted most up-to-date program (APS).

10. Method according to one of the preceding claims,
**characterized**
**in that** the most up-to-date program (APS) is respectively transmitted to the assemblies (BG) in question in parallel.

11. Method according to one of Claims 1 to 8,
**characterized**
**in that** the most up-to-date program (APS) is transmitted to the assemblies (BG) in question serially.

12. Method according to one of the preceding claims,
**characterized**
**in that** the most up-to-date program (APS) is transmitted only to the at least one assembly (BG) without the most up-to-date program (APS).

13. Method according to one of the preceding claims,
**characterized**
**in that** the circuit-related and program-related messages (n) for mapping the communication installation (KA) on each assembly (BG) comprise information relating to the priority prescribed in terms of circuitry, relating to the circuitry and relating to programs (APS) on a respective assembly (BG).

14. Method according to one of the preceding claims,
**characterized**
**in that** the similarity and up-to-date nature of the programs (APS) is established using a program identity number in the information relating to the programs (APS), where the program identity number denotes the type and up-to-date nature of the respective program (APS).

## Revendications

1. Procédé pour actualiser la structure de programme d'une installation de communication (KA) modulaire constituée de modules (BG) pilotés par ordinateur reliés par un bus commun (BUS), l'un des modules (BG) piloté par ordinateur étant défini comme module principal (HBG) et chaque module (BG) piloté par ordinateur disposant d'une mémoire de programmes (SP) programmable, **caractérisé en ce que**
- une image-système de l'installation de communication (KA) est générée sur chaque module (BG) et mémorisée respectivement dans une liste-systèrrie (SL) par un échange piloté par le module principal (HBG) de messages (n) relatifs aux programmes et aux circuits entre les modules (BG), l'image-système contenant des informations sur les programmes existants dans les modules respectifs,
- un module (BG) respectif, qui contient le programme (APS) respectif le plus actuel, est déterminé et désignécomme module principal (HBG) à l'aide de la liste-système (SL) pour les programmes (APS) de même type respectifs indiqués dans la liste-système (SL),
- le programme (APS) le plus actuel est transmis à au moins un module (BG) par le module (BG) déterminé respectivement comme module principal (HBG) et
- le programme (APS) transmis le plus actuel est impliqué dans le déroulement du fonctionnement de chaque module (BG).

2. Procédé selon la revendication 1, **caractérisé en ce que** l'échange de messages (n) relatifs aux programmes et aux circuits entre les modules (BG) est amorcé par le module principal (HBG) après la mise en service de l'installation de communication (KA) ou après une modification de la configuration de l' installation de communication (KA).

3. Procédé selon la revendication 1 ou 2, **caractérisé en ce que** le programme le plus actuel (APS) est transmis par l'intermédiaire du bus commun (BUS) pour l'au moins un module (BG), un gestionnaire de communication (KM) étant affecté à chaque module (BG) pour commander l'échange de messages et transmettre ou recevoir des programmes (APS).

4. Procédé selon l'une des revendications précédentes **caractérisé en ce que** l'implication du programme transmis le plus actuel (APS) s'effectue en remplaçant au moins un programme (APS) impliqué jusqu'à présent dans le déroulement du fonctionnement du module (BG).

5. Procédé selon l'une des revendications 3 ou 4, **caractérisé en ce que** la transmission des programmes (APS) les plus actuels respectivement est commandée par les gestionnaires de communication (KM) de différents modules (BG) définis successivement comme module principal (HBG), lorsque les programmes (APS) les plus actuels respectivement ne sont pas mémorisés sur un seul module (BG).

6. Procédé selon l'une des revendications précédentes, **caractérisé en ce que** le module principal (HBG) est défini par une priorité programmée au plan des circuits, lorsque l'installation de communication (KA) est mise en service ou lorsque le programme (APS) le plus actuel respectivement est mémorisé dans plusieurs modules (BG).

7. Procédé selon l'une des revendications précédentes, **caractérisé en ce qu'**une intégration de l'au moins un programme (APS) le plus actuel transmis dans un système global au plan des programmes du module (BG) respectif et qu'une initialisation des bases de données (DB) affectées au module (BG) respectif, sont effectuées pour la mise en service à l'issue de la transmission de l'au moins un programme (APS) le plus actuel.

8. Procédé selon l'une des revendications 1 à 6, **caractérisé en ce qu'**une actualisation des bases de données (DB) affectées au module (BG) respectif avec des programmes (APS) actualisés auparavant est effectuée pour l'adaptation à une modification de la configuration à l'issue de la transmission du programme le plus actuel (APS).

9. Procédé selon l'une des revendications 1 à 6 ou 8, **caractérisé en ce que** pour l'actualisation des programmes (APS) pendant le fonctionnement du module respectif (BG) une mémoire auxiliaire est affectée à ce module (BG), dans laquelle le programme (APS) le plus actuel transmis est mémorisé et sur lequel il est possible de commuter au moins en partie pour l'implication du programme (APS) le plus actuel transmis.

10. Procédé selon l'une des revendications précédentes, **caractérisé en ce que** la transmission du programme le plus actuel (APS) aux modules (BG) concernés s'effectue en parallèle respectivement.

11. Procédé selon l'une des revendications 1 à 8, **caractérisé en ce que** la transmission du programme le plus actuel (APS) aux modules (BG) concernés s'effectue en série.

12. Procédé selon l'une des revendications précédentes, **caractérisé en ce que** la transmission du programme le plus actuel (APS) ne s'effectue qu'à l'au moins un module (BG) sans programme le plus actuel (APS).

13. Procédé selon l'une des revendications précédentes, **caractérisé en ce que** les messages (n) relatifs aux circuits et aux programmes pour reproduire l'installation de communication (KA) sur chaque module (BG) comprennent des informations sur la priorité programmée au plan des circuits, sur les circuits et sur les programmes (APS) présents sur le module (BG) respectif.

14. Procédé selon l'une des revendications précédentes, **caractérisé en ce que** l'identité de type et l'actualité des programmes (APS) est constatée à l'aide d'un numéro d'identité de programme dans les informations relatives aux programmes (APS), le numéro d'identité de programme désignant le type et l'actualité du programme (APS) respectif.
